Europäisches Patentamt
European Patent Office
Office européen des brevets

(19)

(11) Publication number: **0 390 395 A2**

# (12) EUROPEAN PATENT APPLICATION

(21) Application number: 90302955.1

(22) Date of filing: 20.03.90

(51) Int. Cl.⁵: C09K 19/30, C09K 19/34, C09K 19/42

(30) Priority: 28.03.89 JP 76113/89

(43) Date of publication of application: 03.10.90 Bulletin 90/40

(84) Designated Contracting States: DE FR GB

(71) Applicant: SEIKO EPSON CORPORATION
4-1, Nishishinjuku 2-chome
Shinjuku-ku Tokyo-to(JP)

(72) Inventor: Iijima, Chiyoaki
c/o Seiko Epson Corporation, 3-5 Owa
3-chome
Suwa-shi, Nagano-ken(JP)

(74) Representative: Caro, William Egerton et al
J. MILLER & CO. Lincoln House 296-302 High
Holborn
London WC1V 7JH(GB)

## (54) A nematic liquid crystal composition and liquid crystal display device.

(57) A nematic liquid crystal composition comprises a compound (1) represented by the general formula:

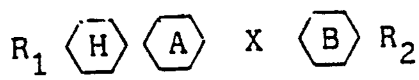

--- (1)

where $R_1$ represents R-, RO- or RCH=CH-, $R_2$ represents R-, RO-, CN- of F-,

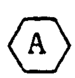 represents 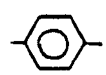 , 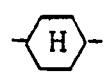 or 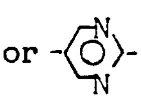 ,

X represents a single bond, -C=C-, $-CH_2CH_2-$, -COO-,

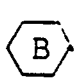 represents 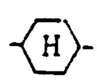 , or 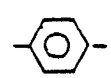 or 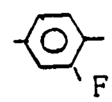

if X is other than $-CH_2CH_2-$, and/or a compound (2) represented by the general formula:

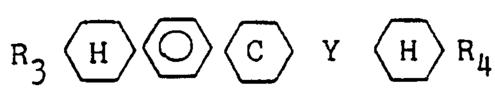

--- (2)

where $R_3$ represents R-, RO- or RCH=CH-, $R_4$ represents R- or RO-, Y represents a single bond or $-CH_2CH_2-$,

EP 0 390 395 A2

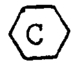 represents 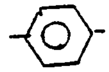 or, 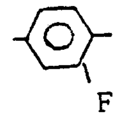 or 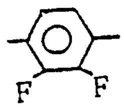

if Y is a single bond, in which the total composition ratio for the compound (1) and the compound (2) is within a range of greater than 20 weight % and contains a compound (3) represented by the general formula:

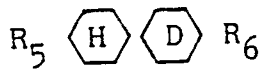 --- (3)

where $R_5$ represents R- or RO-,

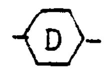 represents

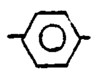 , 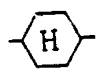 or 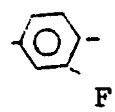 ,

$R_6$ represents -CN or F, and/or a compound (4) represented by the general formula:

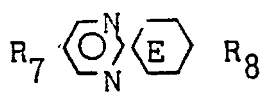 --- (4)

where $R_7$ represents R- or RO-,

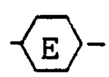 represents 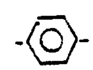

or 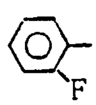 ;

and $R_8$ represents -F,or -CN if

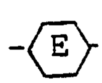 is 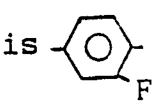 ,

in which the total composition ratio for the compound (3) and the compound (4) is within a range from 5 to 55 weight % providing that R- represents a linear alkyl group with 1 to 9 carbon atoms.

# A NEMATIC LIQUID CRYSTAL COMPOSITION AND LIQUID CRYSTAL DISPLAY DEVICE

This invention relates to liquid crystal compositions and to liquid crystal display devices.

In a known super-twisted nematic type liquid crystal display device the twist angle $\phi$ is dependent upon a ratio d/p (d = thickness d of a liquid crystal layer and p = spiral pitch) and the possible range for normal operation of such a liquid crystal display device not suffering from discrimination lines or finger prints is proposed as:-

$\phi$ / 360 - 1/4 < d/p < $\phi$ / 360     (a)

Such a liquid crystal display device is disclosed in JP-A-62194224.

However, the range for the ratio d/p is reduced to less than one half of the range defined by formula (a) due to the scattering in the liquid crystal layer or the spiral pitch p of the liquid crystal layer as a result of production or fluctuation of the ratio d/p with temperature change, etc. Thus the range for the ratio d/p is markedly reduced as the twist angle of the liquid crystal layer is increased. Accordingly, in production, the twist angle of the liquid crystal layer has a limit of about 230°. Further, a compound (3) represented by the general formula

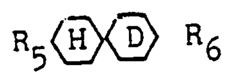

and a compound (4) represented by the general formula

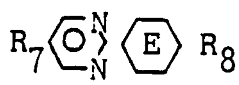

tend to cause domains and show an extremely narrow range for the ratio d/p. However, since compounds (3) and (4) have large dielectric anisotropy they are extremely effective for reducing the threshold voltage.

The present invention seeks to provide a liquid crystal display device which utilises compound (3) or compound (4), which is capable of increasing the application range for the ratio d/p, which keeps the ration d/p constant with respect to temperature change, which is capable of mass production even for twist angles of greater than 240° and which can be used over a wide temperature range. The present invention also seeks to enable mass production of a liquid crystal display device having a twist angle from 180 to 230° and with improved contrast.

According to one aspect of the present invention there is provided a nematic liquid crystal composition characterised by comprising a compound (1) represented by the general formula:

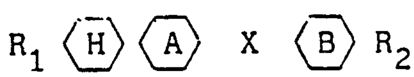 --- (1)

where $R_1$ represents R-, RO- or RCH=CH-, $R_2$ represents R-, RO-, CN- of F-,

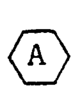 represents 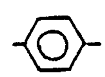 , 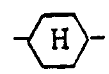 or 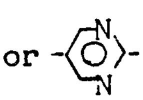 ,

X represents a single bond, -C=C-, $-CH_2CH_2-$, -COO-,

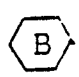 represents 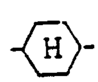 , or 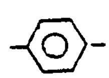 or 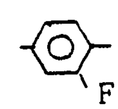

if X is other than $-CH_2CH_2-$, and/or a compound (2) represented by the general formula:

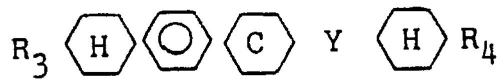 --- (2)

where $R_3$ represents R-, RO- or RCH=CH-, $R_4$ represents R- or RO-, Y represents a single bond or $-CH_2CH_2-$,

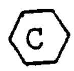 represents 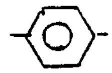 or, 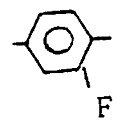 or 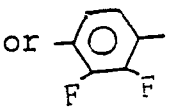

if Y is a single bond, in which the total composition ratio for the compound (1) and the compound (2) is within a range of greater than 20 weight % and contains a compound (3) represented by the general formula:

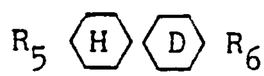 --- (3)

where $R_5$ represents R- or RO-,

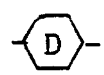 represents

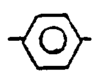 , 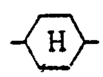 or 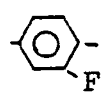 ,

$R_6$ represents -CN or F, and/or a compound (4) represented by the general formula:

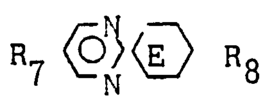 --- (4)

where $R_7$ represents R- or RO-,

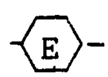 represents 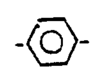

or 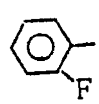

and $R_8$ represents -F,or -CN if

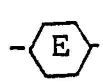 is 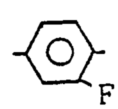 ,

in which the total composition ratio for the compound (3) and the compound (4) is within a range from 5 to 55 weight % providing that R- represents a linear alkyl group with 1 to 9 carbon atoms.

Compound (1) may be any one or more of:

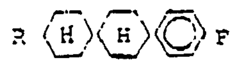

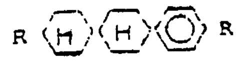

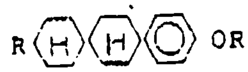

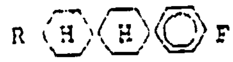

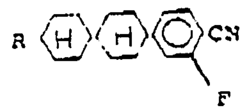

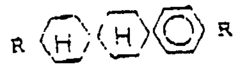

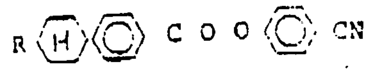

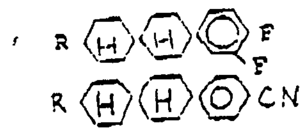

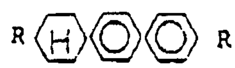

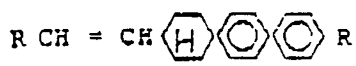

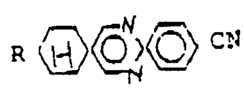

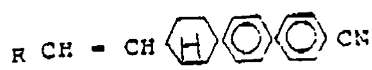

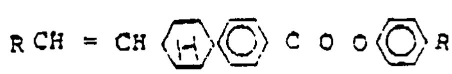

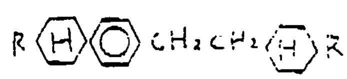

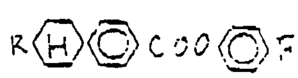

where R is an alkyl group, for example:

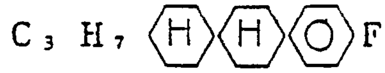

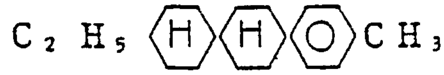

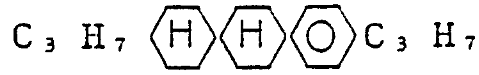

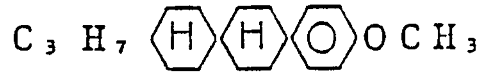

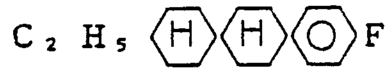

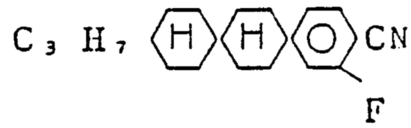

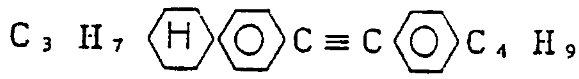

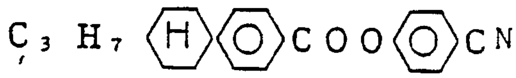

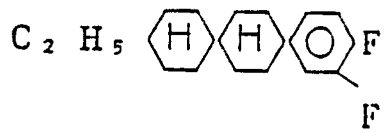

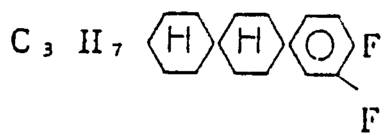

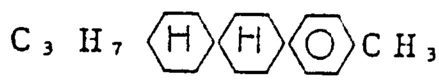

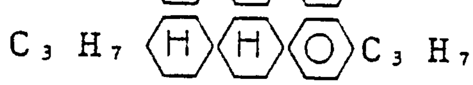

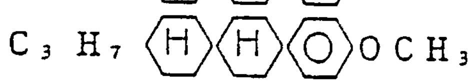

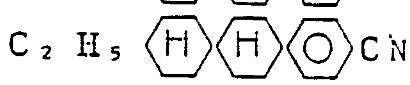

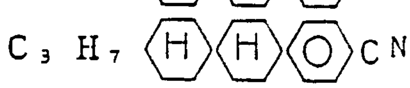

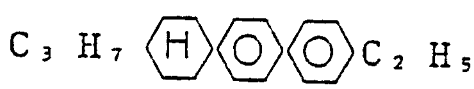

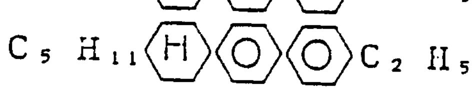

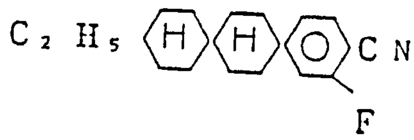

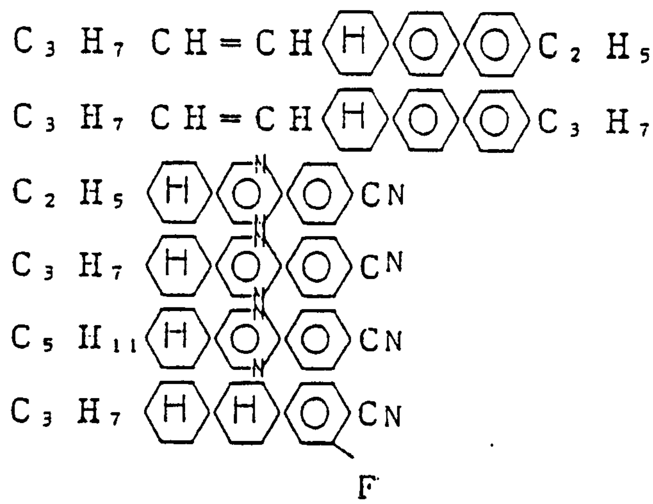

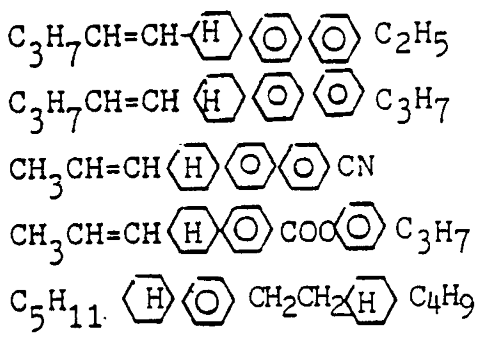

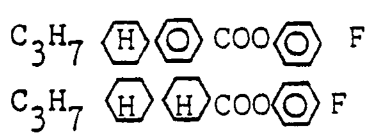

Compound (2) may be any one or more of:

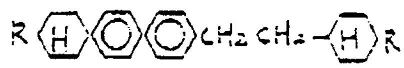

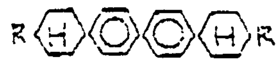

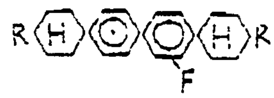

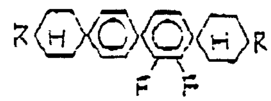

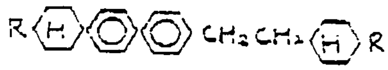

where R is an alkyl group, for example:

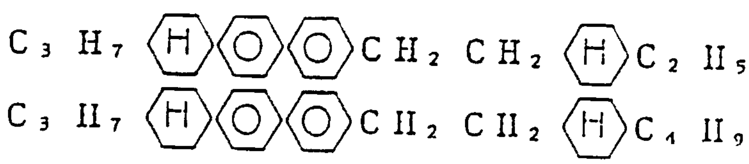

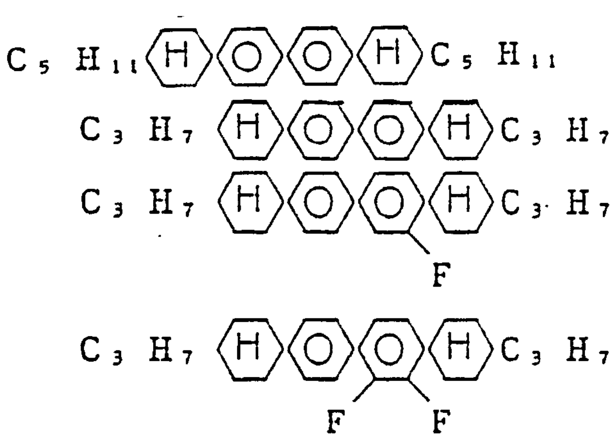

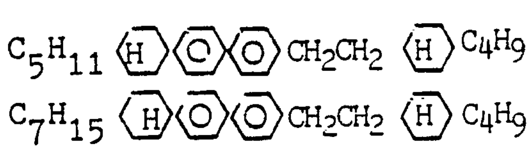

Compound (3) may be any one or more of:-

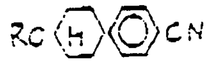

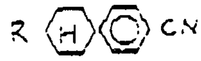

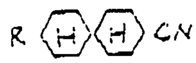

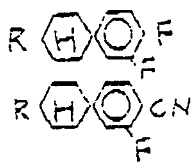

where R is an alkyl group, for example:

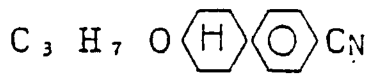

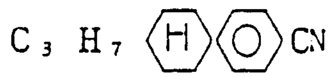

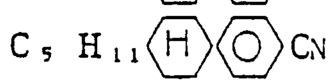

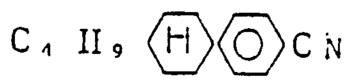

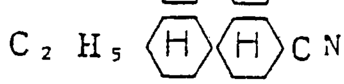

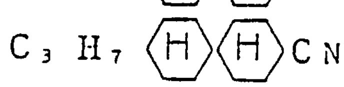

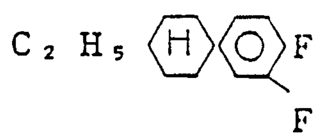

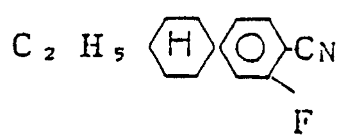

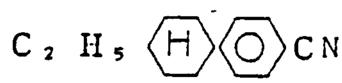

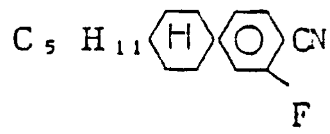

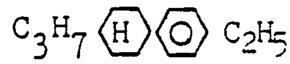

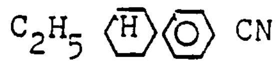

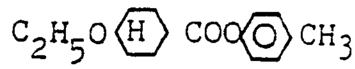

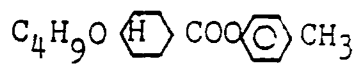

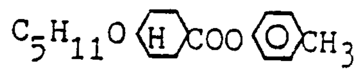

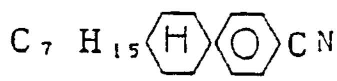

Compound (4) may be either of:

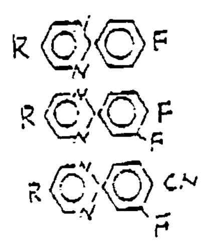

where R is an alkyl group, for example:

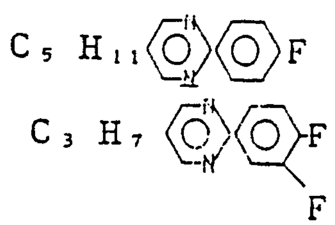

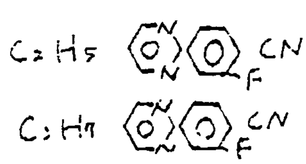

The liquid crystal composition may include:-

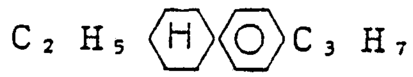

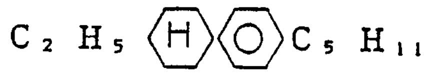

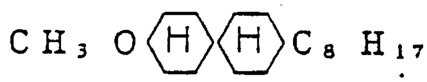

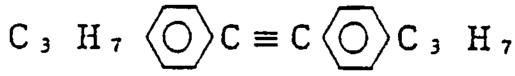

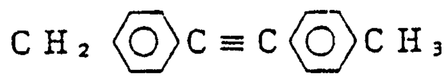

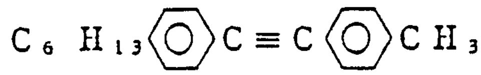

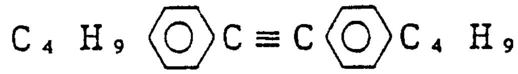

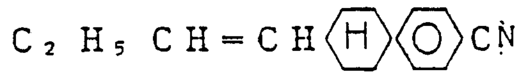

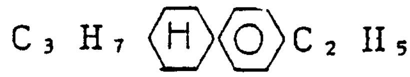

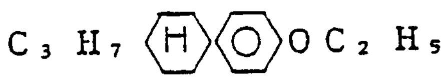

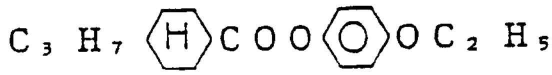

According to another aspect of the present invention, there is provided a liquid crystal display device comprising a liquid crystal cell in which a nematic liquid crystal composition according to the present invention and with a twist angle $\phi$ in the range $180^\circ$ to $360^\circ$ is disposed between a pair of opposed electrode substrates, and a pair of polarisation plates between which the liquid crystal cell is sandwiched, an elastic resin material being disposed between the electrode substrates.

The invention is illustrated, merely by way of example, in the accompanying drawings, in which:-

Figure 1 is a schematic cross sectional view of one embodiment of liquid crystal display device according to the present invention;

Figure 2 is a CIE chromaticity chart showing change of viewing colour in one example of a nematic liquid crystal composition according to the present invention and a conventional comparative example; and

Figure 3 is a graph showing the luminance characteristics relative to voltage for illustrating multiplex driving characteristics.

A typical embodiment of a liquid crystal display device according to the present invention has the structure shown in Figure 1. A multiplex driving circuit 1 applies a multiplex signal to drive a liquid crystal cell 2. The liquid crystal cell 2 has an upper electrode substrate 3 and a lower electrode substrate 4 spaced apart by a pre-determined gap by means of spacers 5. A liquid crystal composition 6 is held between the substrates 3, 4 which are kept at a pre-determined spacing by elastic resin material 7. The liquid crystal cell 2 is sandwiched between an upper polarisation plate 8 and a lower polarisation plate 9. If desired, an optical isometric material may be put between the upper polarisation plate 8 and the lower electrode substrate 3. The elastic resin material 7 may be spherical or rod like in shape and made of synthetic resin material such as polystyrene, butadiene polymer, polyurethane, chloroprene polymer, vinyl chloride - vinyl acetate copolymer, etc.

Figure 3 shows a luminance characteristic relative to voltage in a super twisted type liquid crystal display device. The amount $\beta$ representing the multiplex driving property is defined as:-

$\beta = V_{10}/V_{90}$

where $V_{10}$ represents a voltage at 10% luminance and $V_{90}$ represents a voltage at 90% luminance. $\beta$ has a value greater than 1 and the multiplex driving property is better as the value $\beta$ approaches 1.

Further, as the index showing the temperature dependency of the ratio d/p for the thickness d of the layer of the liquid crystal composition (6) and the spiral pitch p of the liquid crystal layer, the difference

between the ratio d/p at -10°C and the ratio d/p at 60°C is defined as Δ (d/p). If the value Δ (d/p) is relatively large, discrimination lines or finger prints, etc. are liable to be produced with temperature change and thus hinder normal operation.

The present invention will be described in greater detail with reference to the following Examples.

## Comparative Example 1

As a comparative example, a glass fibre was used instead of the elastic material 7 shown in Figure 1 and the liquid crystal composition was as shown in Table 1:

Table 1

| Compound | Composition ratio (wt%) |
|---|---|
| 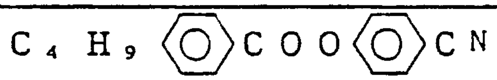 | 10.0 |
| 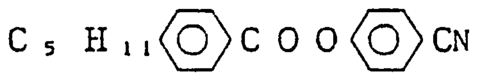 | 10.0 |
| 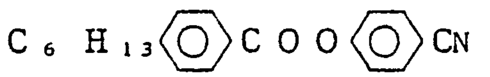 | 10.0 |
| 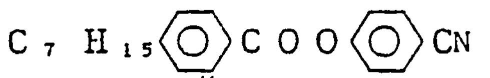 | 10.0 |
| 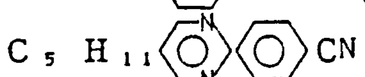 | 12.0 |
| 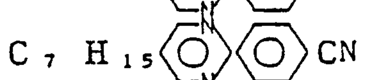 | 12.0 |
| 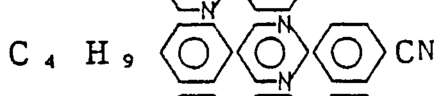 | 14.0 |
| 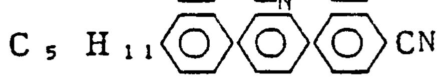 | 6.0 |
| 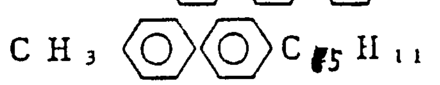 | 10.0 |
| 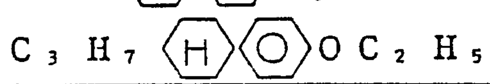 | 6.0 |

## Comparative Example 2

The liquid crystal composition was as shown in Table 2:-

Table 2

| | Compound | Composition ratio (wt%) |
|---|---|---|
| (1) | 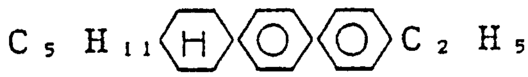 | 8.0 |
| | 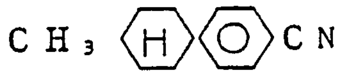 | 8.0 |
| | 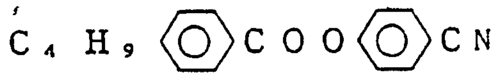 | 10.0 |
| | 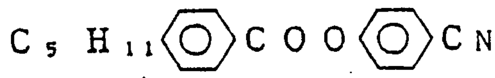 | 10.0 |
| | 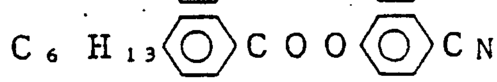 | 9.0 |
| | 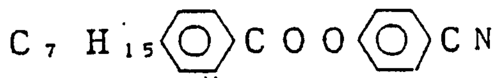 | 9.0 |
| | 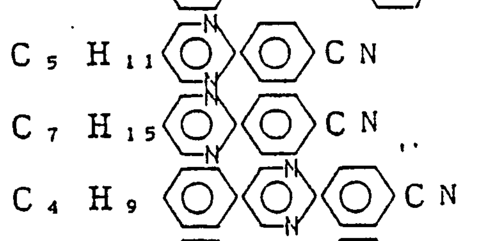 | 10.0 |
| | | 10.0 |
| | | 11.0 |
| | 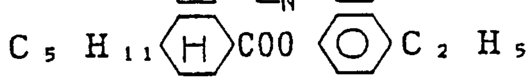 | 7.0 |
| | 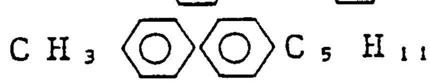 | 8.0 |

Example 1

In this Example, the liquid crystal composition was as shown in Table 3.

Table 3

| | Compound | Composition ratio (wt%) | |
|---|---|---|---|
| (1) | 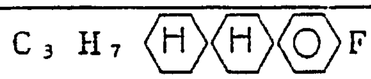 | 10.0 | 50.0 |
| | 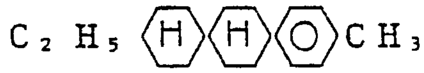 | 10.0 | |
| | 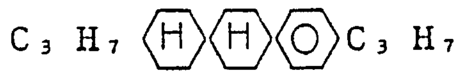 | 5.0 | |
| | 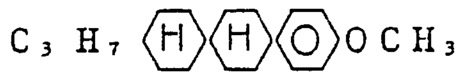 | 5.0 | |
| | 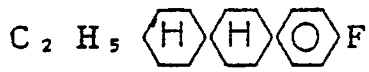 | 5.0 | |
| | 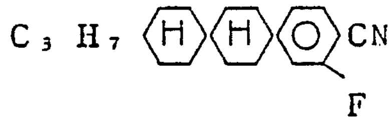 | 5.0 | |
| (2) | 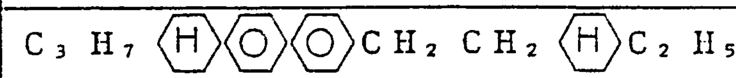 | 5.0 | |
| | 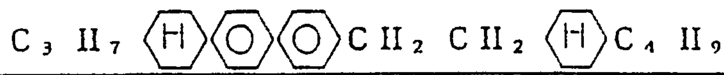 | 5.0 | |
| (3) | 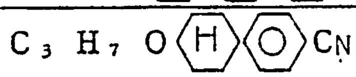 | 5.0 | 30.0 |
| | 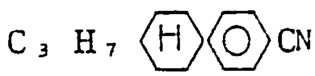 | 5.0 | |
| | 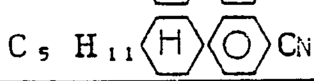 | 10.0 | |
| (4) | 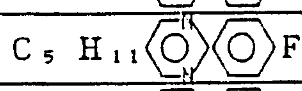 | 10.0 | |
| | 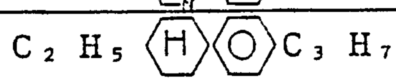 | 10.0 | |
| | 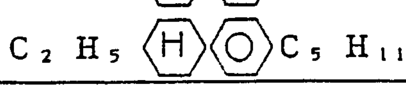 | 10.0 | |

Example 2

In this Example, the liquid crystal composition was as shown in Table 4.

Table 4

| Compound | | Composition ratio (wt%) | |
|---|---|---|---|
| (1) | 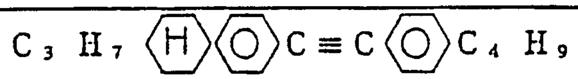 | 7.0 | |
| | 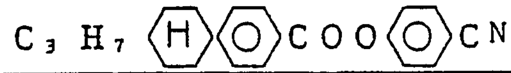 | 3.0 | |
| (2) | 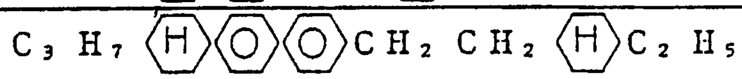 | 4.0 | 26.0 |
| | 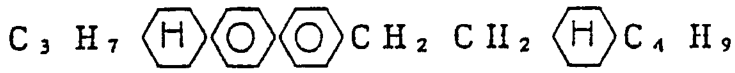 | 8.0 | |
| | 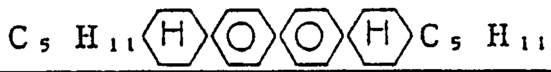 | 4.0 | |
| (3) | 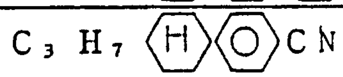 | 20.0 | |
| | 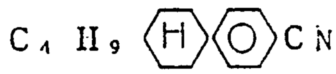 | 20.0 | 54.0 |
| | 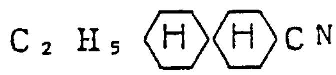 | 7.0 | |
| | 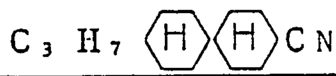 | 7.0 | |
| | 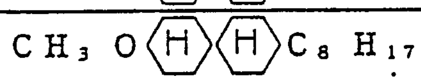 | 14.0 | |
| | 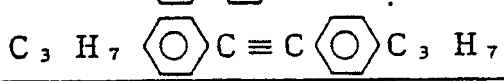 | 6.0 | |

Example 3

In this Example, the liquid crystal composition was as shown in Table 5.

Table 5

| | Compound | Composition ratio (wt%) | |
|---|---|---|---|
| (1) | 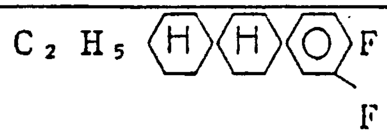 | 9.0 | 49.0 |
| | 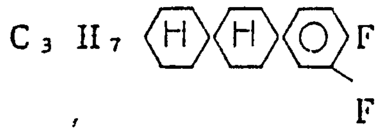 | 12.0 | |
| | 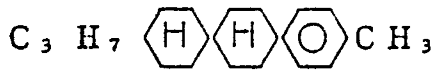 | 6.5 | |
| | 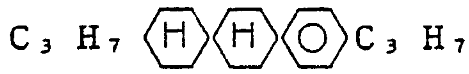 | 6.5 | |
| | 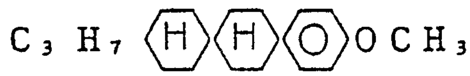 | 4.0 | |
| | 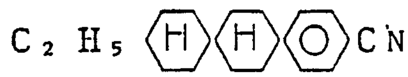 | 5.0 | |
| | 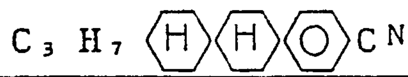 | 6.0 | |
| (3) | 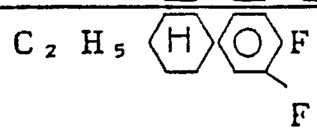 | 10.0 | 20.0 |
| | 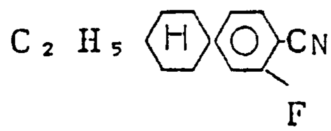 | 10.0 | |
| | 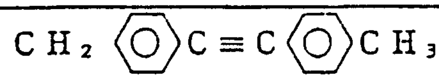 | 10.0 | |
| | 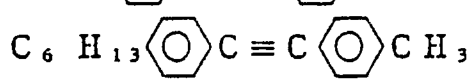 | 6.0 | |
| | 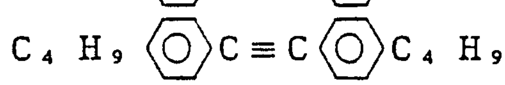 | 5.0 | |
| | 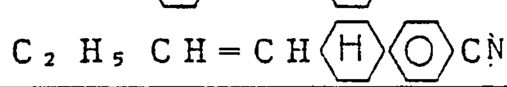 | 10.0 | |

Example 4

In this Example, the liquid crystal composition was as shown in Table 6.

Table 6

| | Compound | Composition ratio (wt%) | |
|---|---|---|---|
| (1) | $C_3H_7$ 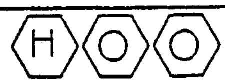 $C_2H_5$ | 13.0 | 33.0 |
| | $C_5H_{11}$ 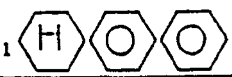 $C_2H_5$ | 10.0 | |
| (2) | $C_3H_7$ 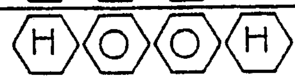 $C_3H_7$ | 4.0 | |
| | $C_3H_7$ 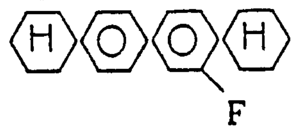 $C_3H_7$ | 3.0 | |
| | $C_3H_7$ 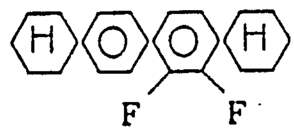 $C_3H_7$ | 3.0 | |
| (3) | $C_2H_5$ 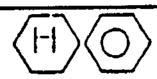 CN | 5.0 | 55.0 |
| | $C_3H_7$ 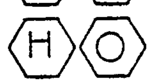 CN | 15.0 | |
| | $C_4H_9$ 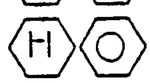 CN | 10.0 | |
| | $C_5H_{11}$ 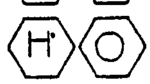 CN | 20.0 | |
| | $C_7H_{15}$ 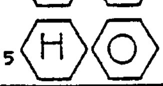 CN | 5.0 | |
| | $C_3H_7$ 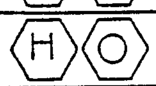 $C_2H_5$ | 12.0 | |

Example 5

In this Example, the liquid crystal composition was as shown in Table 7.

Table 7

| Compound | | Composition ratio (wt%) | |
|---|---|---|---|
| (1) | 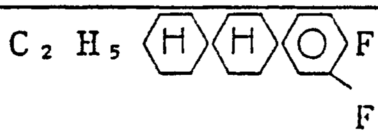 | 8.0 | |
| | 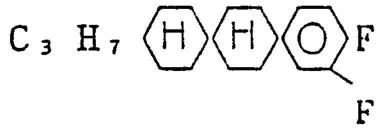 | 12.0 | |
| | 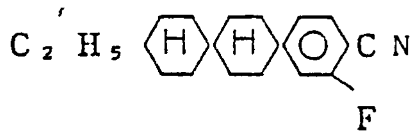 | 10.0 | 74.0 |
| | 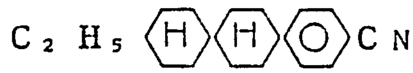 | 10.0 | |
| | 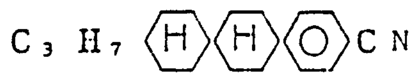 | 10.0 | |
| | 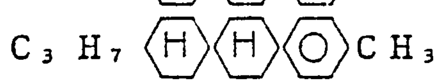 | 8.0 | |
| | 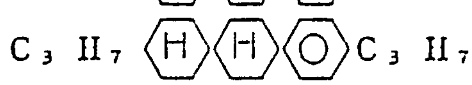 | 8.0 | |
| | 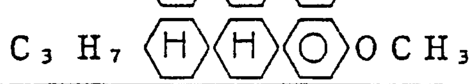 | 8.0 | |
| (3) | 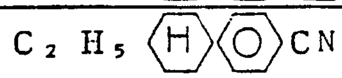 | 8.0 | |
| | 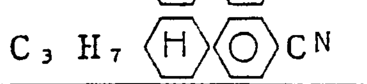 | 10.0 | 26.0 |
| (4) | 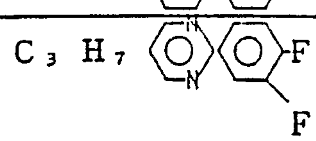 | 8.0 | |

## Example 6

In this Example, the liquid crystal composition was as shown in Table 8.

Table 8

| | Compound | Composition ratio (wt%) | |
|---|---|---|---|
| (1) | 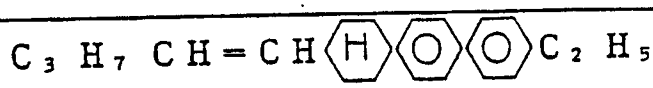 | 11.0 | 45.0 |
| | 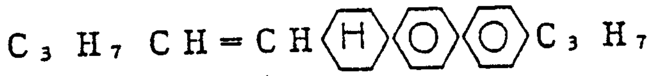 | 14.0 | |
| | 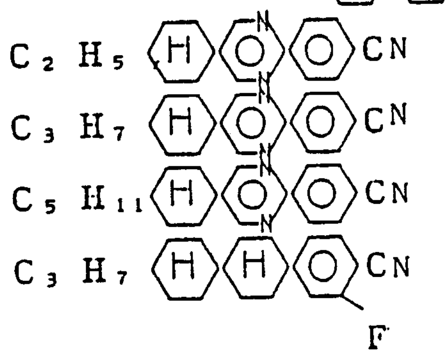 | 5.0 | |
| | | 5.0 | |
| | | 5.0 | |
| | | 5.0 | |
| (3) | 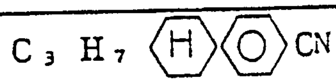 | 20 | 35.0 |
| | 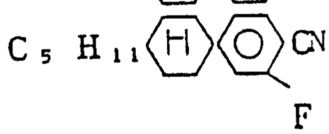 | 15 | |
| | 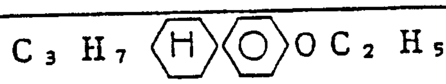 | 10.0 | |
| | 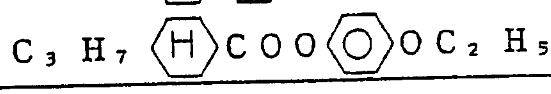 | 10.0 | |

## Example 7

In this Example, the liquid crystal composition was as shown in Table 9.

Table 9

| | Compound | Composition ratio (wt%) | |
|---|---|---|---|
| (1) | 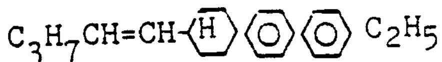 | 5 | 42 |
| | 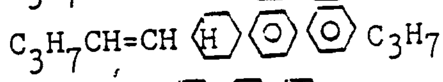 | 10 | |
| | 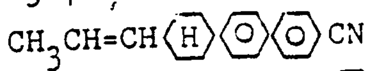 | 10 | |
| | 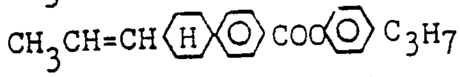 | 5 | |
| | 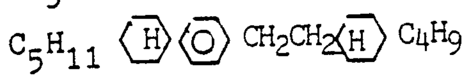 | 12 | |
| (2) | 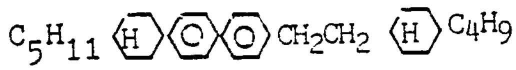 | 4 | |
| | 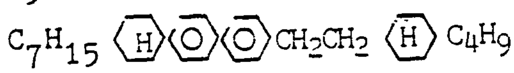 | 4 | |
| (3) | 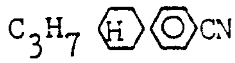 | 20 | 40 |
| | 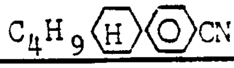 | 20 | |
| | 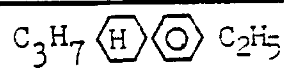 | 10 | |

Example 8

In this Example, the liquid crystal composition was as shown in Table 10.

Table 10

| Compound | Composition ratio (wt%) |
|---|---|
| (1) 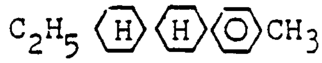 | 4 |
| 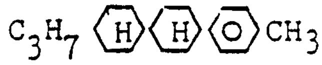 | 8 |
| 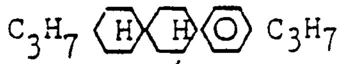 | 8 |
| 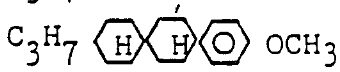 | 2 |
| 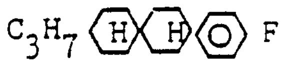 | 4 } 60 |
| 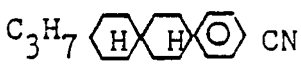 | 5 |
| 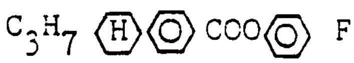 | 10 |
| 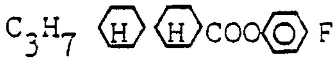 | 19 |
| (3) 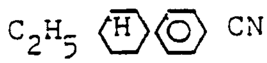 | 5 |
| 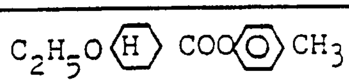 | 15 |
| 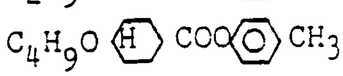 | 10 |
| 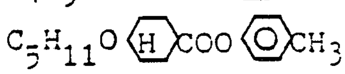 | 10 |

Example 9

In this Example, the liquid crystal composition was as shown in Table 11.

Table 11

| Composition | | | |
|---|---|---|---|
| 1 | 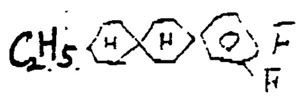 | 8.0 | 74.0 |
| | 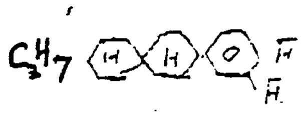 | 12.0 | |
| | 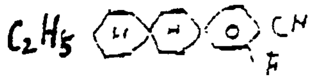 | 10.0 | |
| | 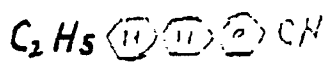 | 10.0 | |
| | 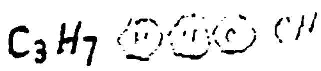 | 10.0 | |
| | 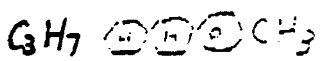 | 8.0 | |
| | 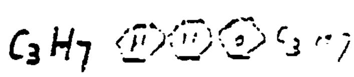 | 8.0 | |
| | 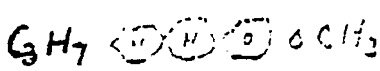 | 8.0 | |
| (4) | 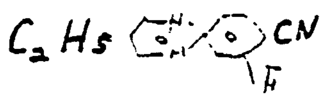 | 8.0 | 26 |
| | 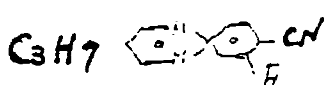 | 8.0 | |
| | 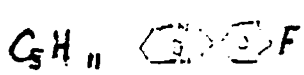 | 10.0 | |

The value of Δ (d/p), β and the ratio d/p at room temperature for Comparative Examples 1 and 2 and Examples 1 to 9 when an optical activator S-811 (manufactured by Merk Co.) was added, to adjust the twist angle of the liquid crystal composition to 200°, 250° and 300° are shown respectively in Tables 12, 13 and 14. The axis of absorption for each of the upper and lower polarisation plates was assumed to deviate by 45° from the rubbing direction of an adjacent electrode substrate respectively. Further the product Δn•d of the optical anisotropy Δn of the liquid crystal composition and the thickness d of the layer of the liquid crystal composition was about 0.8 μm to 0.9 μm.

Table 12

d/p

| Twisting angle / Example | 200° | 250° | 300° |
|---|---|---|---|
| Example 1 | 0.35 ~ 0.51 | 0.49 ~ 0.58 | 0.68 ~ 0.74 |
| Example 2 | 0.36 ~ 0.51 | 0.49 ~ 0.58 | 0.68 ~ 0.73 |
| Example 3 | 0.35 ~ 0.51 | 0.49 ~ 0.58 | 0.69 ~ 0.74 |
| Example 4 | 0.34 ~ 0.55 | 0.50 ~ 0.59 | 0.68 ~ 0.77 |
| Example 5 | 0.33 ~ 0.50 | 0.50 ~ 0.58 | 0.68 ~ 0.74 |
| Example 6 | 0.34 ~ 0.50 | 0.49 ~ 0.56 | 0.67 ~ 0.71 |
| Example 7 | 0.34 ~ 0.55 | 0.50 ~ 0.59 | 0.67 ~ 0.77 |
| Example 8 | 0.35 ~ 0.51 | 0.49 ~ 0.58 | 0.68 ~ 0.73 |
| Example 9 | 0.33 ~ 0.50 | 0.50 ~ 0.59 | 0.68 ~ 0.74 |
| Comparative Example 1 | 0.35 ~ 0.49 | 0.50 ~ 0.57 | 0.69 ~ 0.74 |
| Comparative Example 2 | 0.34 ~ 0.48 | 0.51 ~ 0.56 | 0.69 ~ 0.71 |

Table 13

β

| Example \ Twisting angle | 200° | 250° | 300° |
|---|---|---|---|
| Example 1 | 1.085 | 1.055 | 1.022 |
| Example 2 | 1.075 | 1.030 | 1.010 |
| Example 3 | 1.090 | 1.052 | 1.015 |
| Example 4 | 1.099 | 1.061 | 1.031 |
| Example 5 | 1.087 | 1.044 | 1.020 |
| Example 6 | 1.082 | 1.039 | 1.011 |
| Example 7 | 1.091 | 1.051 | 1.011 |
| Example 8 | 1.077 | 1.033 | 1.009 |
| Example 9 | 1.079 | 1.039 | 1.017 |
| Comparative | | | |
| Example 1 | 1.123 | 1.077 | 1.055 |
| Example 2 | 1.109 | 1.075 | 1.050 |

Table 14

$\Delta$(d/p)

| Example \ Twisting angle | 200° | 250° | 300° |
|---|---|---|---|
| Example 1 | 0.01 | 0.02 | 0.02 |
| Example 2 | 0.03 | 0.03 | 0.03 |
| Example 3 | 0.01 | 0.02 | 0.02 |
| Example 4 | 0.02 | 0.02 | 0.02 |
| Example 5 | 0.01 | 0.02 | 0.02 |
| Example 6 | 0.01 | 0.02 | 0.02 |
| Example 7 | 0.02 | 0.02 | 0.01 |
| Example 8 | 0.01 | 0.02 | 0.02 |
| Example 9 | 0.02 | 0.03 | 0.03 |
| Comparative | | | |
| Example 1 | 0.04 | 0.05 | 0.05 |
| Example 2 | 0.04 | 0.05 | 0.04 |

As apparent from Table 12, the range for the ratio d/p in Examples 1 to 9 is substantially the same as that in Comparative Examples 1 and 2. The range of the ratio d/p can be widened for the compounds (3) and (4) by adding compound (1) and/or compound (2).

As apparent from Table 13, given the same twist angle, each of Examples 1 to 9 shows a small $\beta$ value and has excellent multiplex property as compared with the Comparative Examples. That is, contrast can be improved. Further, as apparent from Table 14, the temperature dependance of the ratio d/p is extremely small. Accordingly, whilst domains are formed at -10°C with a twist angle of 250° in Comparative Examples 1 and 2, domains were not observed within the range from -10°C to 60°C at a twist angle of 300° in Examples 1 to 9. It is considered that the inherent pitch p of the liquid crystal compositions of Examples 1 to 9 shows less temperature dependance as compared with the Comparative Examples. Moreover, since the elastic resin material has a greater thermal expansion coefficient than glass fibres at a low temperature where the spiral pitch p is reduced markedly, the thickness d of the layer of the liquid crystal composition is reduced, thereby keeping the ratio d/p constant.

Figure 2 shows the change of viewing colour relative to temperature in the Comparative Example 1 and Example 5. As apparent from Figure 2, Example 5 shows less colour change with change of temperature. This was also confirmed for other Examples. According to the present invention, the ratio d/p can be kept constant and, moreover, change of viewing angle can be reduced.

As has been described above, according to the present invention, since the range of the ratio d/p can be maintained constant over a wide temperature range, the twist angle of the liquid crystal composition can be increased and this is extremely effective for improving contrast. Further, liquid crystal display devices according to the present invention can be mass produced with twist angles between 180° and 230°. Furthermore, change of viewing colour is reduced over a wide temperature range.

**Claims**

1. A nematic liquid crystal composition characterised by comprising a compound (1) represented by the general formula:

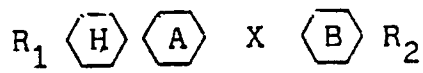 --- (1)

where $R_1$ represents R-, RO- or RCH=CH-, $R_2$ represents R-, RO-, CN- of F-,

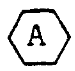 represents 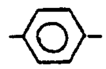, 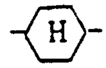 or 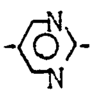,

X represents a single bond, -C=C-, $-CH_2CH_2-$, -COO-,

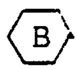 represents 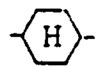, or 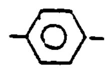 or 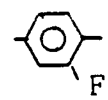

if X is other than $-CH_2CH_2-$, and/or a compound (2) represented by the general formula:

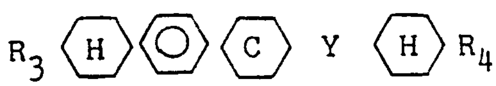 --- (2)

where $R_3$ represents R-, RO- or RCH=CH-, $R_4$ represents R- or RO-, Y represents a single bond or $-CH_2CH_2-$,

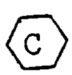 represents 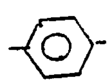 or, 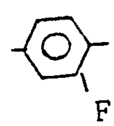 or 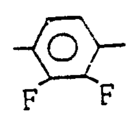

if Y is a single bond, in which the total composition ratio for the compound (1) and the compound (2) is within a range of greater than 20 weight % and contains a compound (3) represented by the general formula:

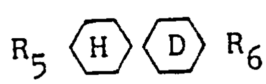 --- (3)

where $R_5$ represents R- or RO-,

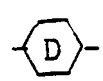 represents

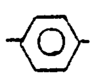, 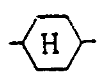 or 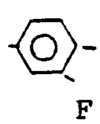, :

$R_6$ represents -CN or F, and/or a compound (4) represented by the general formula:

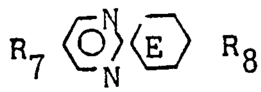 --- (4)

where $R_7$ represents R- or RO-,

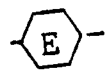 represents 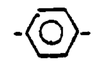

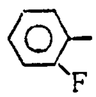 -

and $R_8$ represents -F, or -CN if

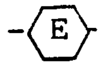 is 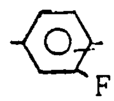 ,

in which the total composition ratio for the compound (3) and the compound (4) is within a range from 5 to 55 weight % providing that R- represents a linear alkyl group with 1 to 9 carbon atoms.

2. A liquid crystal composition as claimed in claim 1 characterised in that compound (1) is any one or more of:

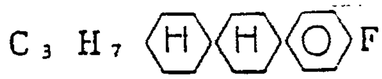

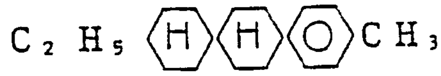

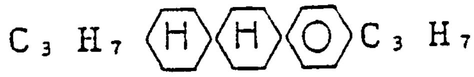

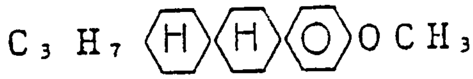

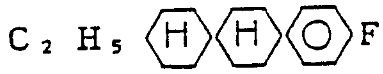

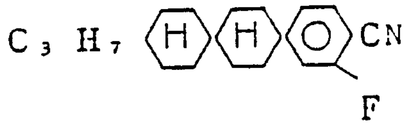

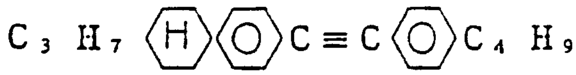

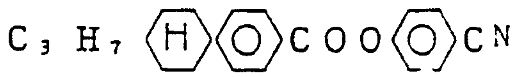

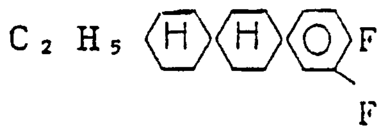

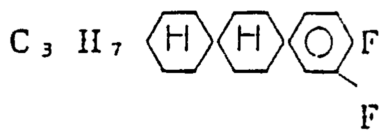

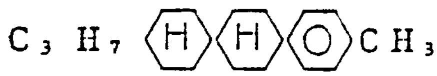

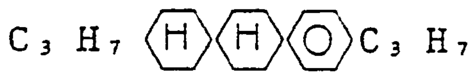

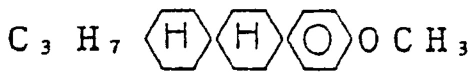

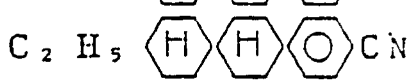

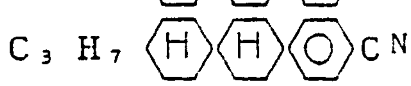

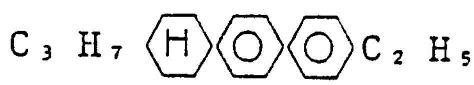

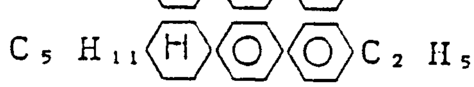

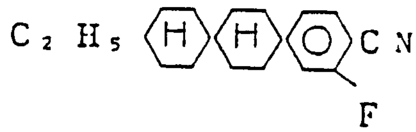

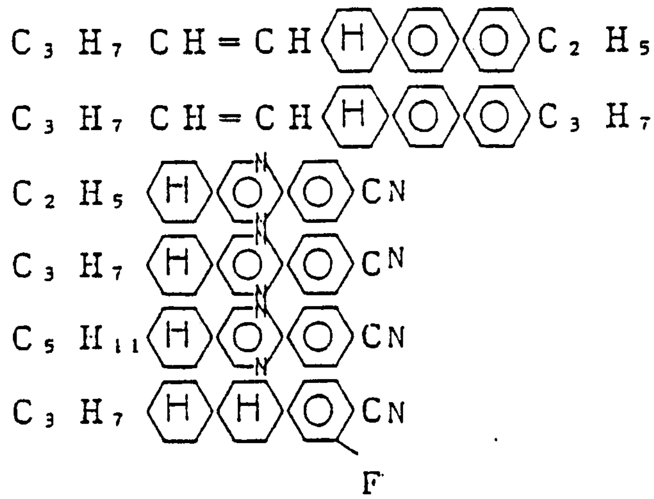

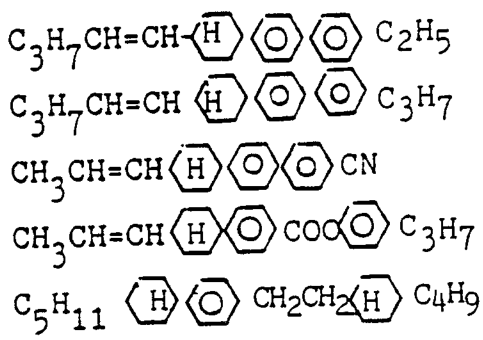

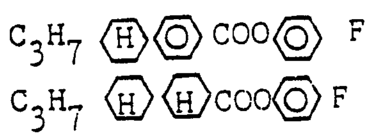

3. A liquid crystal composition as claimed in any preceding claim characterised in that compound (2) is any one or more of:

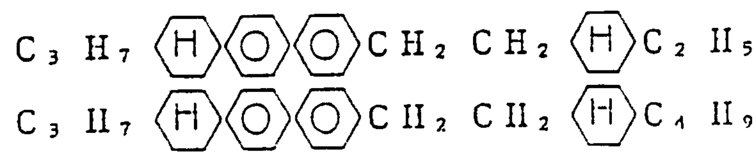

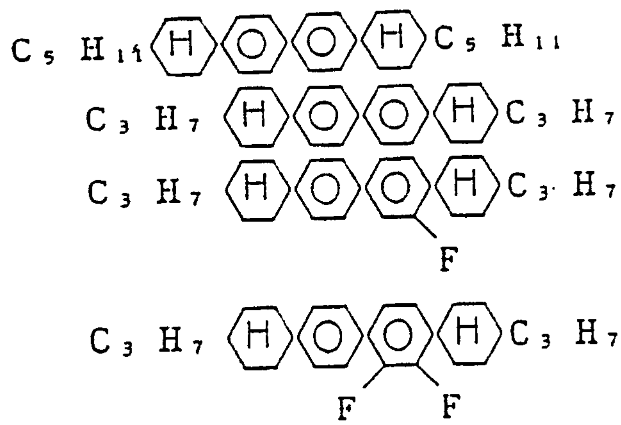

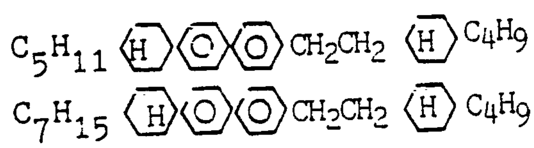

4. A liquid crystal composition as claimed in any preceding claim characterised in that compound (3) is any one or more of:

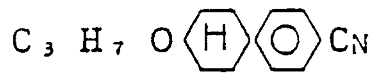

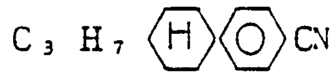

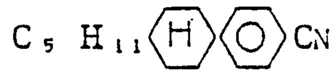

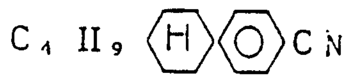

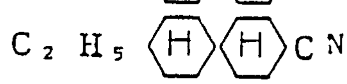

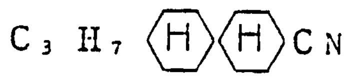

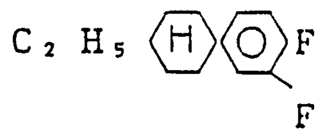

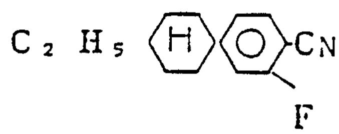

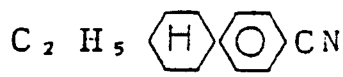

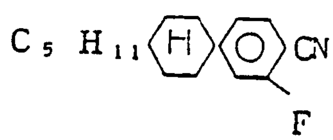

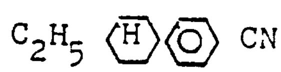

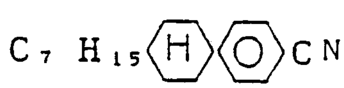

5. A liquid crystal composition as claimed in any preceding claim characterised in that compound (4) is either of:

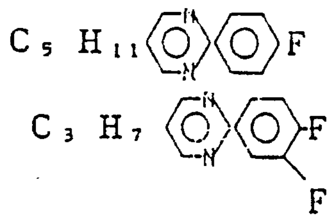

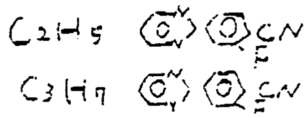

6. A liquid crystal composition as claimed in any preceding claim characterised by including:

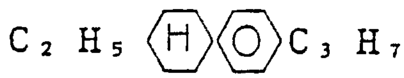

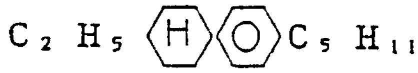

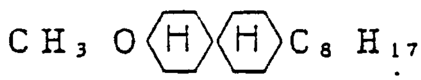

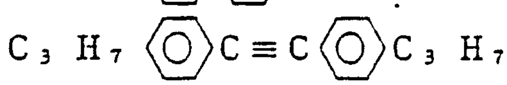

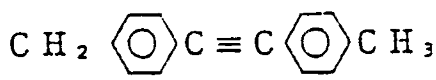

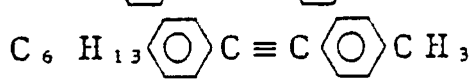

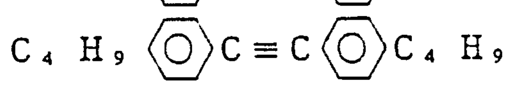

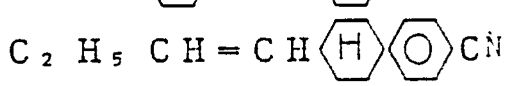

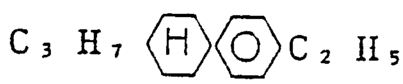

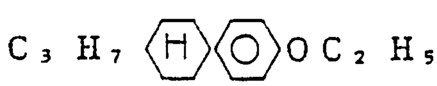

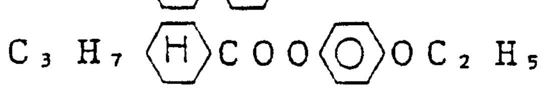

7. A liquid crystal display device characterised by comprising a liquid crystal cell (2) in which a nematic liquid crystal composition (6) as claimed in any preceding claim and with a twist angle (ϕ) in the range 180° to 360° is disposed between a pair of opposed electrode substrates (3, 4), and a pair of polarisation plates (8, 9) between which the liquid crystal cell is sandwiched, an elastic resin material (7) being disposed between the electrode substrates (3, 4).

8. A liquid crystal display device comprising a liquid crystal cell in which nematic liquid crystals twisted within a range 180° to 360° are put between a pair of opposed electrode substrates and a pair of polarisation plates disposed on both sides of the liquid crystal cell, wherein an elastic resin material is put between the two electrode substrates, and the nematic liquid crystals comprise a composition containing a compound (1) represented by the general formula:

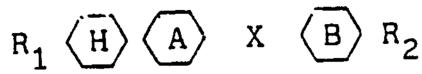 --- (1)

where $R_1$ represents R-, RO- or RCH=CH-, $R_2$ represents R-, RO-, CN- of F-,

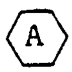 represents 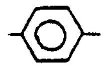, 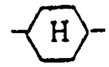 or 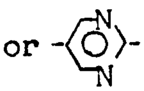 ,

X represents a single bond, -C=C-, $-CH_2CH_2-$, -COO-,

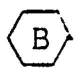 represents 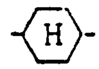 , or 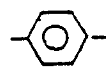 or 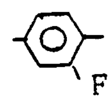

if X is other than $-CH_2CH_2-$, and/or a compound (2) represented by the general formula:

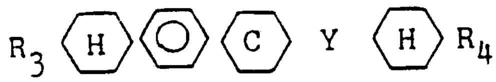 --- (2)

where $R_3$ represents R-, RO- or RCH=CH-, $R_4$ represents R- or RO-, Y represents a single bond or $-CH_2CH_2-$,

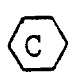 represents 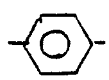 or, 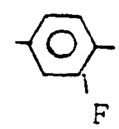 or 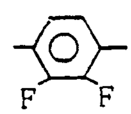

if Y is a single bond, in which the total composition ratio for the compound (1) and the compound (2) is within a range of greater than 20 weight % and contains a compound (3) represented by the general formula:

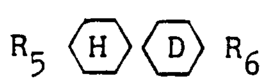 --- (3)

where $R_5$ represents R- or RO-,

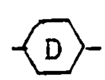 represents

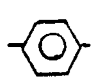 , 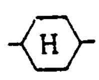 or 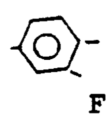 ,

$R_6$ represents -CN or F, and/or a compound (4) represented by the general formula:

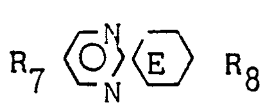 --- (4)

where $R_7$ represents R- or RO-,

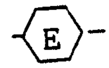 represents 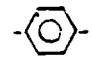

or 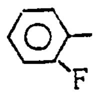

and $R_8$ represents -F, or -CN if

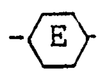 is 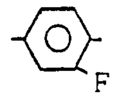 ,

in which the total composition ratio for the compound (3) and the compound (4) is within a range from 5 to 55 weight % providing that R- represents a linear alkyl group with 1 to 9 carbon atoms.

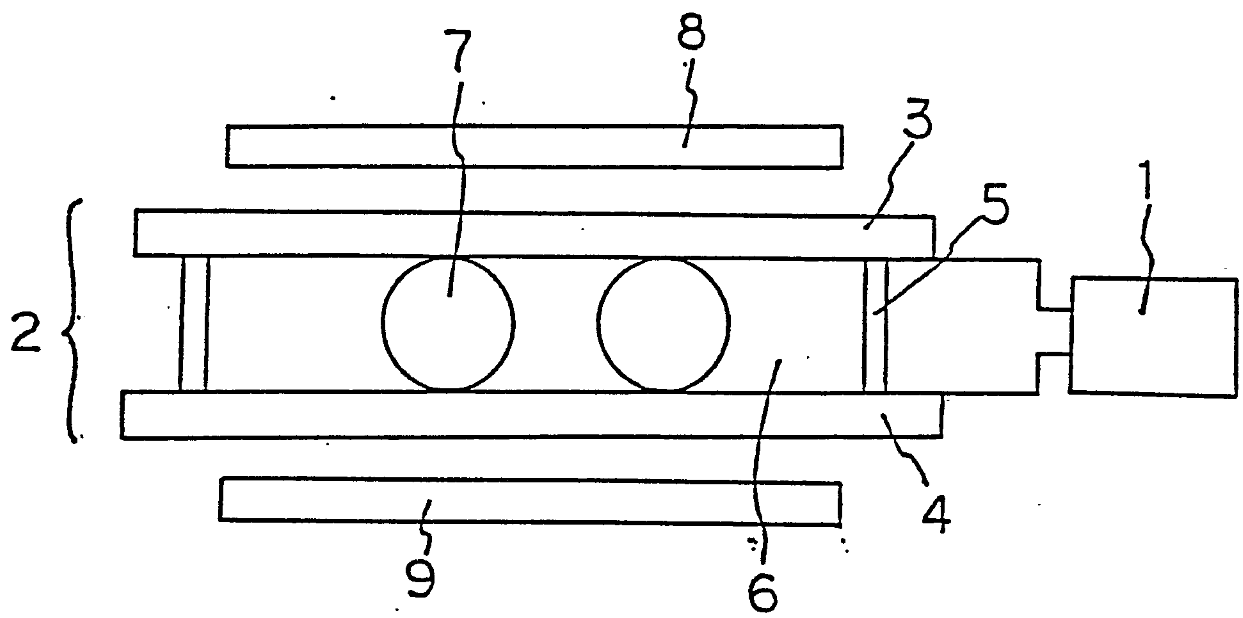


Fig. 1

2/3

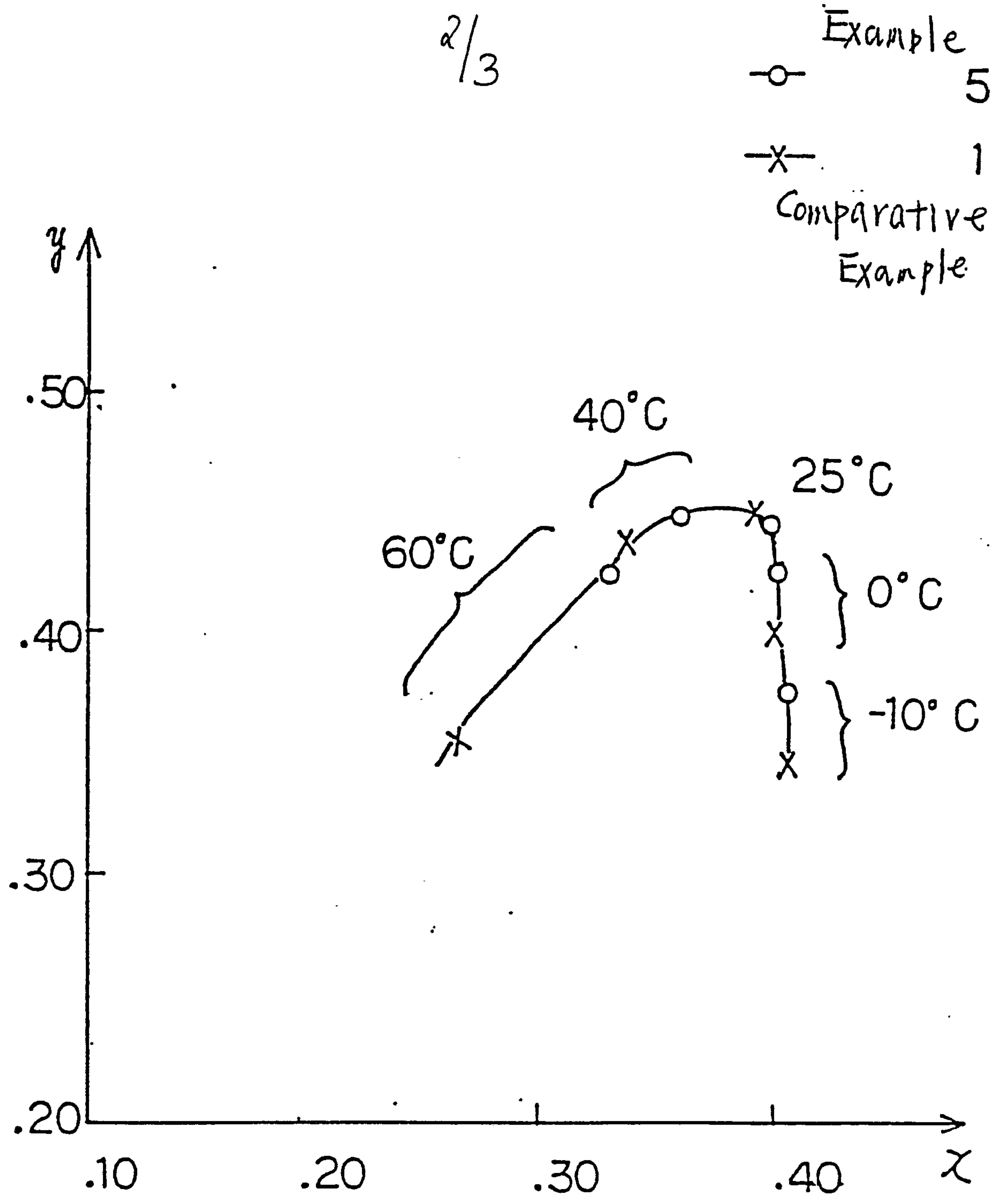
Example
5
1
Comparative Example
y
.50
.40
.30
.20
.10
.20
.30
.40
x
40°C
25°C
60°C
0°C
-10° C

Fig. 2

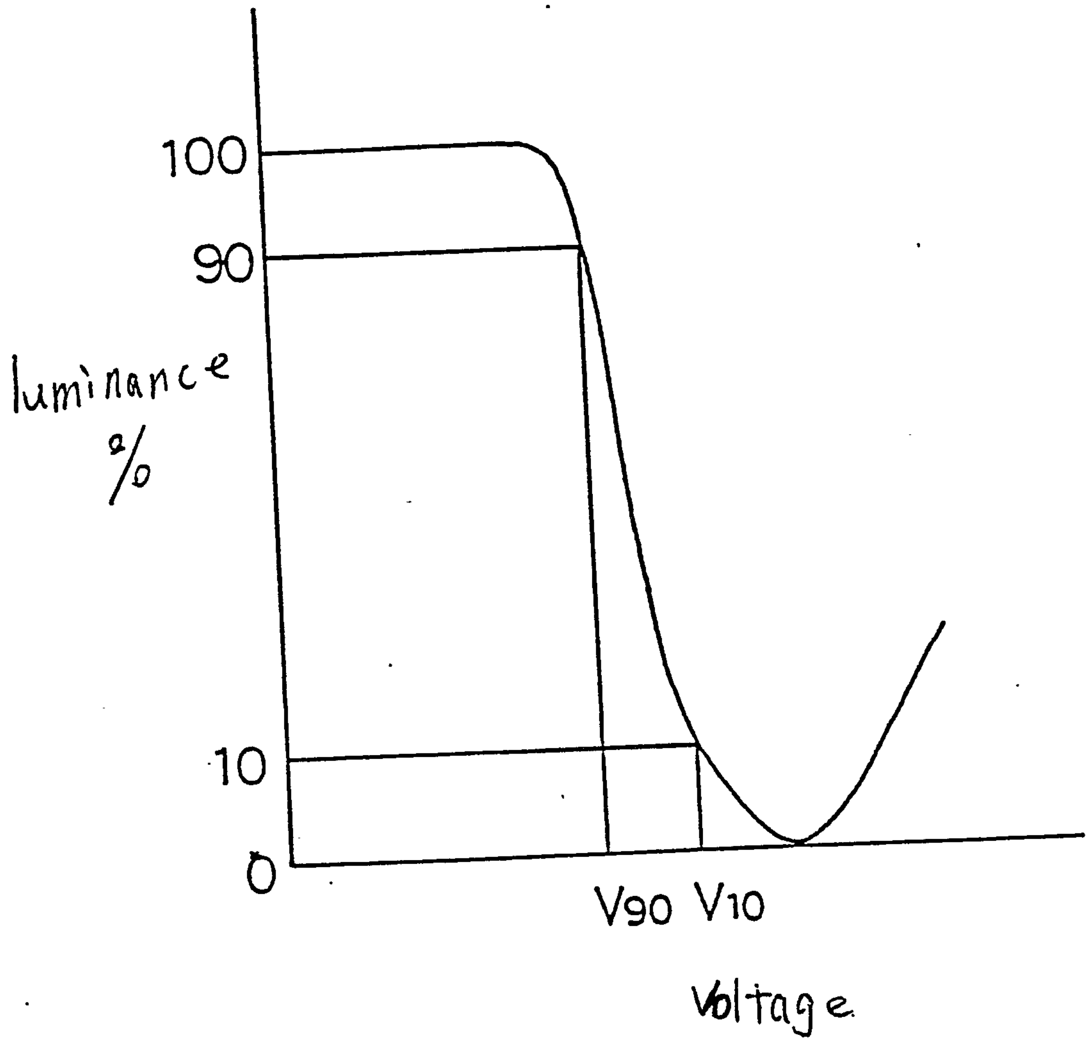


Fig. 3